(19) Europäisches Patentamt / European Patent Office / Office européen des brevets

(11) **EP 4 280 492 A1**

(12) **EUROPEAN PATENT APPLICATION**
published in accordance with Art. 153(4) EPC

(43) Date of publication:
**22.11.2023 Bulletin 2023/47**

(21) Application number: **22739760.1**

(22) Date of filing: **14.01.2022**

(51) International Patent Classification (IPC):
**H04L 1/00** (2006.01)   **H04L 5/00** (2006.01)
**H04W 72/04** (2023.01)   **H04W 72/12** (2023.01)

(52) Cooperative Patent Classification (CPC):
**H04L 1/00; H04L 5/00; H04W 72/04; H04W 72/12**

(86) International application number:
**PCT/KR2022/000720**

(87) International publication number:
**WO 2022/154567 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.01.2021 KR 20210005633**

(71) Applicant: **LG Electronics Inc.**
**Yeongdeungpo-gu**
**Seoul 07336 (KR)**

(72) Inventors:
• **CHOI, Seunghwan**
  **Seoul 06772 (KR)**
• **KIM, Seonwook**
  **Seoul 06772 (KR)**
• **YANG, Suckchel**
  **Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND DEVICE FOR TRANSMITTING AND RECEIVING SIGNAL IN WIRELESS COMMUNICATION SYSTEM**

(57) A method and device for transmitting and receiving a signal in a wireless communication system disclosed in the present specification can use a reference SCS, instead of an SCS actually applied to first PDCCH candidates on the basis of a specific condition, when determining the maximum number M1 of first PDCCH candidates to be monitored per set unit of time and cell and the maximum number M2 of second PDCCH candidates to be monitored per set unit of time and cell.

FIG. 4

```
┌─────────────────────────────────────────┐
│        Configuring N1 and N2            │──S401
└─────────────────────────────────────────┘
                    │
                    ▼
┌─────────────────────────────────────────┐
│  based on N1+N2 > Nc, determining M1 and M2 │──S403
└─────────────────────────────────────────┘
                    │
                    ▼
┌─────────────────────────────────────────┐
│ based on M1 and M2, monitoring first PDCCH candidates │──S405
│        and second PDCCH candidates      │
└─────────────────────────────────────────┘
```

**Description**

**TECHNICAL FIELD**

The present disclosure relates to a method and apparatus for use in a wireless communication system.

**BACKGROUND**

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

**DISCLOSURE**

**TECHNICAL PROBLEM**

The object of the present disclosure is to provide a signal transmission and reception method for efficiently transmitting and receiving control and signals in a wireless communication system and apparatus therefor.
It will be appreciated by persons skilled in the art that the objects that could be achieved with the present disclosure are not limited to what has been particularly described hereinabove and the above and other objects that the present disclosure could achieve will be more clearly understood from the following detailed description.

**TECHNICAL SOLUTION**

The present disclosure provides a method and apparatus for transmitting and receiving a signal in a wireless communication system.
In an aspect of the present disclosure, there is provided a method of transmitting and receiving a signal by a user equipment (UE) in a wireless communication system. The method may include: configuring N1 first downlink cells for monitoring first physical downlink control channel (PDCCH) candidates based on a first subcarrier spacing (SCS) and configuring N2 second downlink cells for monitoring second PDCCH candidates based on a second SCS; based on that a sum of N1 and N2 is greater than or equal to a maximum number of cells in which the UE is capable of monitoring a PDCCH, Nc, determining a maximum number of first PDCCH candidates to be monitored per time unit and per cell, M1 and a maximum number of second PDCCH candidates to be monitored per time unit and per cell, M2; and monitoring the first PDCCH candidates and the second PDCCH candidates based on M1 and M2. M1 may be determined based on (i) Nc, (ii) N1, (iii) N2, and (iv) Mmax1, where Mmax1 is a maximum number of PDCCH candidates to be monitored per time unit and per cell for the first SCS. Based on that a reference SCS for the first SCS is configured, N1 and Mmax1 may be determined as values related to the reference SCS rather than the first SCS.
In another aspect of the present disclosure, there are provided an apparatus, a processor, and a storage medium for performing the signal transmission and reception method.
The apparatus may include an autonomous driving vehicle communicable with at least a UE, a network, and another autonomous driving vehicle other than the communication apparatus.
The above-described aspects of the present disclosure are only some of the preferred embodiments of the present disclosure, and various embodiments reflecting the technical features of the present disclosure may be derived and understood from the following detailed description of the present disclosure by those skilled in the art.

**ADVANTAGEOUS EFFECTS**

According to one embodiment of the present disclosure, when control signals are transmitted and received between communication devices, the signals may be transmitted and received more efficiently based on operations different from those in the prior art.
Specifically, for subcarrier spacings (SCSs) above a predetermined threshold, a reference SCS may be used instead of an actual SCS, thereby reducing the burden on a user equipment (UE) and improving the power efficiency of the UE.
It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

## BRIEF DESCRIPTION OF THE DRAWINGS

FIG. 1 illustrates a radio frame structure.
FIG. 2 illustrates a resource grid during the duration of a slot.
FIG. 3 illustrates a self-contained slot structure.
FIG. 4 illustrates transmission and reception methods according to the present disclosure.
FIGS. 5 to 8 illustrate a communication system 1 and wireless devices applied to the present disclosure.

## DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system, "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

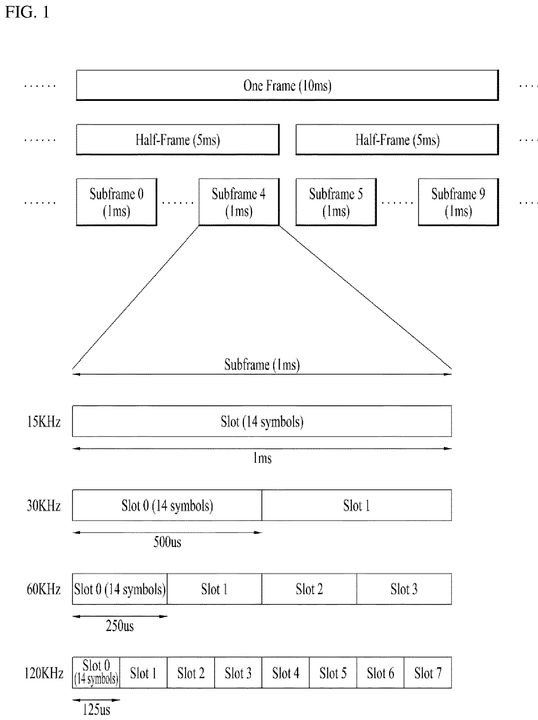

FIG. 1 illustrates a radio frame structure used for NR.
In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).
Table 1 exemplarily illustrates that the number of symbols per slot, the number of slots per frame, and the number of slots per subframe vary according to SCSs in a normal CP case.

[Table 1]

| SCS (15*2^u) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| * $N^{slot}_{symb}$: number of symbols in a slot <br> * $N^{frame,u}_{slot}$: number of slots in a frame <br> * $N^{subframe,u}_{slot}$: number of slots in a subframe | | | |

Table 2 illustrates that the number of symbols per slot, the number of slots per frame, and the number of slots per subframe vary according to SCSs in an extended CP case.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25kHz may be supported to overcome phase noise.

An NR frequency band may be defined by two types of frequency ranges, FR1 and FR2. FR1 and FR2 may be configured as described in Table 3 below. FR2 may be millimeter wave (mmW).

[Table 3]

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

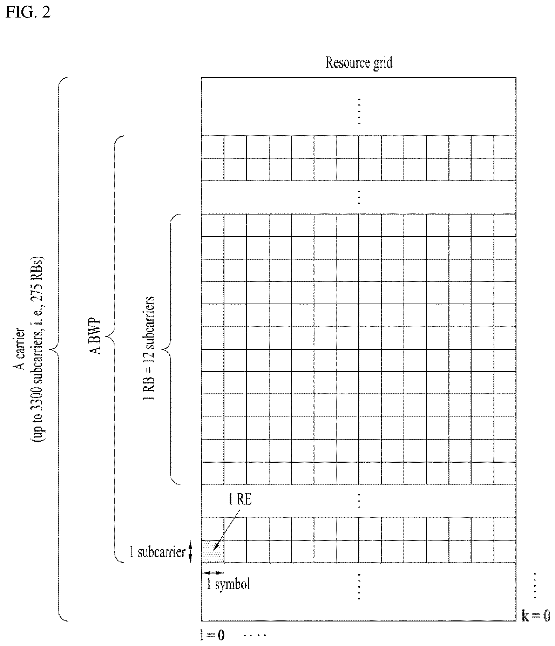

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m∈{0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a LTE receives information from a BS in downlink (DL), and the UE transmits information to the BS in uplink (LTL). The information exchanged between the BS and LTE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

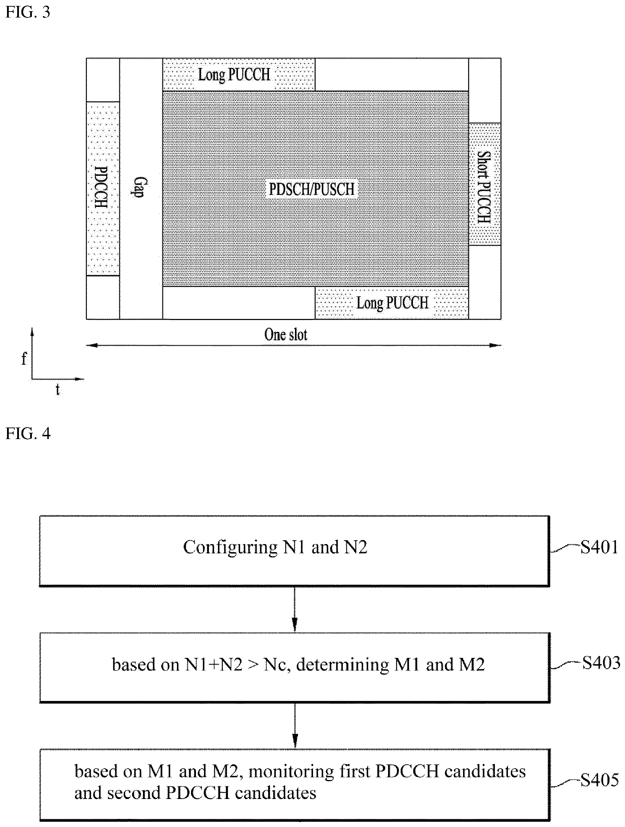

FIG. 3 illustrates a structure of a self-contained slot.

In the NR system, a frame has a self-contained structure in which a DL control channel, DL or LTL data, a LTL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the LTL control region may be used for DL data transmission or LTL data transmission. For example, the following configuration may be considered. Respective sections are listed in a temporal order.

In the present disclosure, a base station (BS) may be, for example, a gNode B (gNB).

DL Physical Channel/Signal

(1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

(2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time/frequency resource allocation information on a higher layer control message such as a random access response (RAR) transmitted over a PDSCH; transmit power control commands; and information on activation/deactivation of SPS/CS. Various DCI formats may be provided depending on information in DCI.

Table 4 shows DCI formats transmitted over the PDCCH.

[Table 4]

| DCI format | Usage |
|---|---|
| 0_0 | Scheduling of PUSCH in one cell |
| 0_1 | Scheduling of one or multiple PUSCH in one cell, or indicating downlink feedback information for configured grant PUSCH (CG-DFI) |
| 1_0 | Scheduling of PDSCH in one cell |
| 1_1 | Scheduling of PDSCH in one cell, and/or triggering one shot HARQ-ACK codebook feedback |
| 2_0 | Notifying a group of UEs of the slot format, available RB sets, COT duration and search space set group switching |

(continued)

| DCI format | Usage |
|---|---|
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a CBG-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as LTL grant DCI or LTL scheduling information, and DCI format 1_0/1_1 may be referred to as DL grant DCI or UL scheduling information. DCI format 2_0 may be used to provide dynamic slot format information (e.g., dynamic SFI) to the UE, and DCI format 2_1 may be used to provide downlink pre-emption information to the UE. UEs defined as one group may be provided with DCI format 2_0 and/or DCI format 2_1 over a group common PDCCH, which is a PDCCH defined for a group of UEs.

The PDCCH/DCI may include a cyclic redundancy check (CRC), and the CRC may be masked/scrambled with various identifiers (e.g., radio network temporary identifier (RNTI)) according to the owner or purpose of the PDCCH. For example, if the PDCCH is for a specific UE, the CRC may be masked with a cell-RNTI (C-RNTI). If the PDCCH relates to paging, the CRC may be masked with a paging-RNTI (P-RNTI). If the PDCCH relates to system information (e.g., system information block (SIB)), the CRC may be masked with a system information RNTI (SI-RNTI). If the PDCCH relates to a random access response, the CRC may be masked with a random access-RNTI (RA-RNTI).

Table 5 shows the usage of the PDCCH and transport channels according to the type of RNTI. Here, the transport channel means a transport channel related to data carried by a PDSCH/PUSCH scheduled by the PDCCH.

[Table 5]

| RNTI | Usage | Transport Channel |
|---|---|---|
| P-RNTI | Paging and System Information change notification | PCH(Paging Channel) |
| SI-RNTI | Broadcast of System Information | DL-SCH |
| RA-RNTI | Random Access Response | DL-SCH |
| Temporary C-RNTI | Contention. Resolution (when no valid C-RNTI is available) | DL-SCH |
| Temporary C-RNTI | Msg3 transmission | UL-SCH |
| C-RNTI, MCS(Modulation and Coding Scheme)-C-RNTI | Dynamically scheduled unicast transmission | UL-SCH |
| C-RNTI | Dynamically scheduled unicast transmission | DL-SCH |
| MCS-C-RNTI | Dynamically scheduled unicast transmission | DL-SCH |
| C-RNTI | Triggering of PDCCH ordered random access | N/A |
| CS(Configued Scheduling)-RNTI | Configured scheduled unicast transmission (activation, reactivation and retransmission) | DL-SCH, UL-SCH |
| CS-RNTI | Configured scheduled unicast transmission (deactivation) | N/A |
| TPC(Transmit Power Control)-PUCCH-RNTI | PUCCH power control | N/A |
| TPC-PUSCH-RNTI | PUSCH power control | N/A |
| TPC-SRS-RNTI | SRS trigger and power control | N/A |
| INT(Interruption)-RNTI | Indication pre-emption in DL | N/A |

(continued)

| RNTI | Usage | Transport Channel |
|---|---|---|
| SFI(Slot Format Indication)-RNTI | Slot Format Indication on the given cell | N/A |
| SP(Semi-persistent)-CSI(Channel State Information)-RNTI | Activation of Semi-persistent CSI reporting on PUSCH | N/A |

For the PDCCH, a fixed modulation scheme may be used (e.g., quadrature phase shift keying (QPSK)). One PDCCH may include 1, 2, 4, 8, or 16 control channel elements (CCEs) depending on the aggregation level (AL). One CCE may include 6 resource element groups (REGs), and one REG may be defined by one OFDMA symbol and one (P)RB.

The PDCCH may be transmitted in a control resource set (CORESET). The CORESET corresponds to a set of physical resources/parameters used to carry the PDCCH/DCI within a BWP. For example, the CORESET may include a set of REGs with a given numerology (e.g., SCS, CP length, etc.). The CORESET may be configured by system information (e.g., MIB) or UE-specific higher layer (e.g., RRC) signaling. For example, the following parameters/information may be used to configure the CORESET. One UE may be configured with one or more CORESETs, and a plurality of CORESETs may overlap in the time/frequency domain.

- controlResourceSetId: this parameter/information indicates the identifier (ID) of the CORESET.
- frequencyDomainResources: this parameter/information indicates frequency-domain resources of the CORESET. The frequency-domain resources may be indicated by a bitmap, and each bit corresponds to an RB group (= 6 consecutive RBs). For example, the most significant bit (MSB) of the bitmap corresponds to the first RB group in the BWP. An RB group corresponding to a bit with a value of 1 may be allocated as a frequency-domain resource of the CORESET.
- duration: this parameter/information indicates time-domain resources of the CORESET. The parameter/information duration may indicate the number of consecutive OFDMA symbols included in the CORESET. For example, duration has a value of 1-3.
- cce-REG-MappingType: this parameter/information indicates a CCE-to-REG mapping type. An interleaved type and a non-interleaved type may be supported.
- precoderGranularity: this parameter/information indicates a precoder granularity in the frequency domain.
- tci-StatesPDCCH: this parameter/information indicates information (e.g., TCI-StateID) on a transmission configuration indication (TCI) state for the PDCCH. The TCI state may be used to provide a quasi-co-location (QCL) relationship between DL RS(s) in an RS set (TCI-state) and a PDCCH DMRS port.
- tci-PresentInDCI: this parameter/information indicates whether a TCI field is included in DCI.
- pdcch-DMRS-ScramblingID: this parameter/information indicates information used for initialization of a PDCCH DMRS scrambling sequence.

For PDCCH reception, the LTE may monitor (e.g., blind decoding) a set of PDCCH candidates in the CORESET. The PDCCH candidate may mean CCE(s) monitored by the UE for PDCCH reception/detection. PDCCH monitoring may be performed in one or more CORESETs in an active DL BWP on each active cell in which the PDCCH monitoring is configured. The set of PDCCH candidates monitored by the UE may be defined as a PDCCH search space (SS) set. The SS set may be classified into a common search space (CSS) set or a UE-specific search space (USS) set.

Table 6 shows PDCCH search spaces.

[Table 6]

| Search Space | Type | RNTI | Use Case |
|---|---|---|---|
| Type0-PDCCH | Common | SI-RNTI on a primary cell | Broadcast of System Information |
| Type0A-PDCCH | Common | SI-RNTI on a primary cell | Broadcast of System Information |
| Type1-PDCCH | Common | RA-RNTI or TC-RNTI on a primary cell | Msg2, Msg4 in RACH |

(continued)

| Search Space | Type | RNTI | Use Case |
|---|---|---|---|
| Type2-PDCCH | Common | P-RNTI on a primary cell | Paging System Information change; notification |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI or CS-RNTI | Group signaling |
| UE Specific | UE Specific | C-RNTI, MCS-C-RNTI or CS-RNTI | UE signaling (e.g, PDSCH/ PUSCH) |

The SS set may be configured by system information (e.g., MIB) or UE-specific higher layer (e.g., RRC) signaling. S (e.g., 10) SS sets or less may be configured in each DL BWP of a serving cell. For example, the following parameters/information may be provided for each SS set. Each SS set may be associated with one CORESET, and each CORESET configuration may be associated with one or more SS sets.

- searchSpaceId: this parameter/information indicates the ID of the SS set.
- controlResourceSetId: this parameter/information indicates the CORESET associated with the SS set.
- monitoringSlotPeriodicityAndOffset: this parameter/information indicates a PDCCH monitoring periodicity (in a unit of slot) and a PDCCH monitoring offset (in a unit of slot)
- monitoringSymbolsWithinSlot: this parameter/information indicates first OFDMA symbol(s) for PDCCH monitoring in a slot in which the PDCCH monitoring is configured. The first OFDMA symbol(s) are indicated by a bitmap, and each bit corresponds to each OFDMA symbol in the slot. The MSB of the bitmap corresponds to the first OFDM symbol in the slot. OFDMA symbol(s) corresponding to bit(s) with a value of 1 corresponds to the first symbol(s) in the CORESET in the slot.
- nrofCandidates: this parameter/information indicates the number of PDCCH candidates (e.g., one of 0, 1, 2, 3, 4, 5, 6, and 8) for each AL (where AL={1, 2, 4, 8, 16}).
- searchSpaceType: this parameter/information indicates whether the SS type is the CSS or USS.
- DCI format: this parameter/information indicates the DCI format of a PDCCH candidate.

The LTE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

## 1. Control Channel Transmission and Reception in High Frequency Band

The above contents are applicable in combination with methods proposed in the present disclosure, which will be described later. Alternatively, the contents may clarify the technical features of the methods proposed in the present disclosure.
In addition, the following methods may be equally applied to the above-described NR system or shared spectrum (licensed bands). Thus, it is obvious that the terms, expressions, and structures in this document may be modified to be suitable for the system in order to implement the technical idea of the present disclosure in the corresponding system.
The NR system supports various numerologies (or SCSs) to provide various 5G services. For example, the NR system may support a wide area in conventional cellular bands with an SCS of 15 kHz and support a dense urban area and a wide carrier bandwidth with lower latency with an SCS of 30/60 kHz. For an SCS above 60 kHz, NR may support a bandwidth of 24.25 GHz or higher. According to Release 16, NR frequency bands are divided into two frequency ranges (FR1 and FR2), which may be configured as shown in Table 3. In addition, discussions are ongoing to support future NR systems operating above frequency bands defined in FR1/FR2 (for example, 52.6 GHz to 71 GHz).
Frequency bands above FR1 and FR2 (e.g., bands from 52.6 GHz to 114.25 GHz, and more particularly, bands from 52.6 GHz to 71 GHz) may be referred to as FR2-2. The waveforms, SCSs, CP lengths, timings, etc. defined for FR1 and FR2 in the current NR system may not be applied to FR2-2.
In NR operations, a UE capability related to PDCCH monitoring may include the maximum number of PDCCH candidates that the UE is capable of monitoring and the maximum number of non-overlapped (non-overlapping) CCEs. The maximum number refers to the number of PDCCH candidates or CCEs that the UE is capable of monitoring for each slot (or for each span unit introduced in NR Rel-16) in the active DL BWP of a serving cell. Tables 7 and 8 show the maximum number of PDCCH candidates and the maximum number of non-overlapped CCEs depending on SCS configurations.

[Table 7]

| $\mu$ | Maximum number of monitored PDCCH candidates per slot and per serving cell $M_{\text{PDCCH}}^{max,slot,\mu}$ |
|---|---|
| 0 | 44 |
| 1 | 36 |
| 2 | 22 |
| 3 | 20 |

[Table 8]

| $\mu$ | Maximum number of non-overlapped CCEs per slot and per serving cell $C_{\text{PDCCH}}^{max,slot,\mu}$ |
|---|---|
| 0 | 56 |
| 1 | 56 |
| 2 | 48 |
| 3 | 32 |

The maximum number of PDCCH candidates varies for each numerology. The maximum number of PDCCH candidates represents all aggregation levels for each numerology. In addition, all types of DCI are subject to monitoring. Non-overlapped CCEs refer to CCEs having different CORESET indices or CCEs having different first symbols for receiving PDCCH candidates. In this document, non-overlapped CCEs may be simply referred to as CCEs.

Table 9 shows details of PDCCH candidate monitoring in consideration of LTE capabilities.

[Table 9]

If a UE is configured only with $N_{\text{cells,r16}}^{\text{DL},\mu}$ downlink cells for which the UE is provided monitoringCapabilityConfig = r16monitoringcapability and with associated PDCCH candidates monitored in the active DL BWPs of the scheduling cells using SCS configuration $\mu$, and with $N_{\text{cells,r16}}^{\text{DL},(X,Y),\mu}$ of the $N_{\text{cells,r16}}^{\text{DL},\mu}$ downlink cells using combination (X, Y) for PDCCH monitoring, where $\sum_{\mu=0}^{1} N_{\text{cells,r16}}^{\text{DL},\mu} > N_{\text{cells}}^{\text{cap-r16}}$, a DL BWP of an activated cell is the active DL BWP of the activated cell, and a DL BWP of a deactivated cell is the DL BWP with index provided by firstActiveDownlinkB WP-Id for the deactivated cell, the UE is not required to monitor more than

$M_{\text{PDCCH}}^{\text{total},(X,Y),\mu} = \left\lfloor N_{\text{cells}}^{\text{cap-r16}} \cdot M_{\text{PDCCH}}^{\text{max},(X,Y),\mu} \cdot N_{\text{cells,r16}}^{\text{DL},(X,Y),\mu} / \sum_{j=0}^{1} N_{\text{cells,r16}}^{\text{DL},j} \right\rfloor$ PDCCH candidates or more than

$C_{\text{PDCCH}}^{\text{total},(X,Y),\mu} = \left\lfloor N_{\text{cells}}^{\text{cap-r16}} \cdot C_{\text{PDCCH}}^{\text{max},(X,Y),\mu} \cdot N_{\text{cells,r16}}^{\text{DL},(X,Y),\mu} / \sum_{j=0}^{1} N_{\text{cells,r16}}^{\text{DL},j} \right\rfloor$ non-overlapped CCEs

- per set of spans on the active DL BWP(s) of all scheduling cell(s) from the $N_{\text{cells,r16}}^{\text{DL},(X,Y),\mu}$ downlink cells within every X symbols, if the union of PDCCH monitoring occasions on all scheduling cells from the $N_{\text{cells,r16}}^{\text{DL},(X,Y),\mu}$ downlink cells results to PDCCH monitoring according to the combination (X,Y) and any pair of spans in the set is within Y symbols, where first X symbols start at a first symbol with a PDCCH monitoring occasion and next X symbols start at a first symbol with a PDCCH monitoring occasion that is not included in the first X symbols

(continued)

| - per set of spans across the active DL BWP(s) of all scheduling cells from the $N_{\text{cells,r16}}^{\text{DL},(X,Y),\mu}$ downlink cells, with at most one span per scheduling cell for each set of spans, otherwise where $N_{\text{cells,r16}}^{\text{DL,j}}$ is a number of configured cells with associated PDCCH candidates monitored in the active DL BWPs of the scheduling cells using SCS configuration j. If a UE is configured with downlink cells for which the UE is provided both monitoringCapabilityConfig = r15monitoringcapability and monitoringCapabilityConfig = r16monitoringcapability, $N_{\text{cells}}^{\text{cap-r16}}$ is replaced by $N_{\text{cells,r16}}^{\text{cap-r16}}$. |
|---|

When PDCCH monitoring is required for multiple DL cells, such as carrier aggregation, the number of DL cells that the BS configures to the LTE for PDCCH monitoring, $N_{\text{cells,r16}}^{\text{DL},\mu}$ (referred to as N_(cells,r16)^(DL,$\mu$)) and the maximum number of DL cells in which the LTE is capable of monitoring a PDCCH as the LTE capability, $N_{\text{cells}}^{\text{cap-r16}}$ (referred to as N_(cells)^(cap-r16)) may be determined. If the sum of the numbers of DL cells N_(cells,r16)^(DL,$\mu$) configured for PDCCH monitoring for different numerologies exceeds the maximum number of DL cells allowed for PDCCH monitoring N_(cells)^(cap-r16), the LTE may reduce the number of PDCCH candidates that the LTE is capable of monitoring according to Equation 1 of Table 9 (

$$M_{\text{PDCCH}}^{\text{total},(X,Y),\mu} = \left\lfloor N_{\text{cells}}^{\text{cap-r16}} \cdot M_{\text{PDCCH}}^{\text{max},(X,Y),\mu} \cdot N_{\text{cells,r16}}^{\text{DL},(X,Y),\mu} \Big/ \sum_{j=0}^{1} N_{\text{cells,r16}}^{\text{DL,j}} \right\rfloor$$

) or decrease the number of DL cells configured for monitoring to be less than or equal to N_(cells)^(cap-r16). Furthermore, for cases where the sum of the numbers of configured DL cells N_(cells,r16)^(DL,$\mu$) exceeds N_(cells)^(cap-r16), the UE may use Equation 2 (

$$C_{\text{PDCCH}}^{\text{total},(X,Y),\mu} = \left\lfloor N_{\text{cells}}^{\text{cap-r16}} \cdot C_{\text{PDCCH}}^{\text{max},(X,Y),\mu} \cdot N_{\text{cells,r16}}^{\text{DL},(X,Y),\mu} \Big/ \sum_{j=0}^{1} N_{\text{cells,r16}}^{\text{DL,j}} \right\rfloor$$

) to decrease the number of CCEs to be less than or equal to the maximum number of CCEs specified as the UE capability.

For NR systems operating in high frequency bands (e.g., 60 GHz), a new SCS (or new numerology) has been introduced. Specifically, an SCS of 480 kHz and an SCS of 960 kHz have been newly introduced in addition to an SCS of 120 kHz defined in FR2. The OFDM symbol length and slot length of the added SCSs are relatively shorter than those of the existing SCS. Thus, operations configured to be performed during a duration of one symbol or slot may impose a burden on the LTE. For example, the 960 kHz SCS has a slot duration that is 1/8th the slot duration of the 120 kHz SCS. If PDCCH candidates are monitored repeatedly during the slot duration, it may cause a sudden surge in power consumption of the UE within a short duration. To address this issue, methods are being discussed to change or set the current slot (or symbol) unit operations to slot group (or symbol group) unit operations.

For NR operations in high-frequency and wide bands (e.g., above 52.6 GHz), the present disclosure proposes methods of determining the number of PDCCH candidates for PDCCH monitoring and/or the maximum number of CCEs in consideration of newly introduced SCSs and symbol and/or slot group unit operations therefor when the maximum number of PDCCH candidates for PDCCH monitoring and/or the maximum number of CCEs are configured and when multiple DL cells supporting different numerologies are configured.

1.1) When a specific SCS (e.g., 480 kHz, 960 kHz, etc.) is configured for NR systems operating in high frequency bands (e.g., 60 GHz), the LTE may monitor PDCCH candidates on a symbol group and/or slot basis.

Configurations related to PDCCH candidate monitoring may be determined based on a new time unit (e.g., symbol group unit or slot group unit) rather than the current symbol or slot unit. Depending on predetermined conditions, the operations based on the new time unit may be semi-statically configured through higher layer signaling such as RRC/MAC-CE or dynamically triggered by DCI. In this case, the predetermined conditions may be defined based on the frequency band in use (e.g., 60 GHz) and/or the configured SCS (e.g., 480 kHz, 960 kHz, etc.).

Table 10 shows an example in which the SCS is set to 480 kHz and the number of PDCCH candidates are configured in units of four slots and an example in which the SCS is set to 960 kHz and the number of PDCCH candidates are configured in units of 8 slots.

[Table 10]

| $\mu$ | Maximum number of monitored PDCCH candidates per time unit and per serving cell $M_{\text{PDCCH}}^{max,slot,\mu}$ |
|---|---|
| 5 | 20 per 4 slots |

(continued)

| $\mu$ | Maximum number of monitored PDCCH candidates per time unit and per serving cell $M_{\text{PDCCH}}^{max,slot,\mu}$ |
|---|---|
| 6 | 20 per 8 slots |

When the LTE is configured with 480 kHz and/or 960 kHz, the LTE may monitor PDCCH candidates in units of a slot duration corresponding to a reference SCS (ref-SCS), instead of monitoring PDCCH candidates for each slot.

As a specific implementation example, when the LTE is configured to monitor multiple cells with different SCSs (in this example, X cells with the 120 kHz SCS and Y cells with the 480 kHz and/or 960 kHz SCS are assumed), the maximum number of PDCCH candidates that the UE is capable of monitoring per slot is defined for each SCS. The UE may perform channel estimation within one slot for each SCS based on Equation 1 and/or Equation 2. Alternatively, the UE may calculate the maximum number of PDCCH candidates that the LTE is capable of monitoring in one slot per SCS based on Equation 1 and/or Equation 2. In this case, the LTE may set the ref-SCS for the 480 kHz and/or 960 kHz SCS to 120 kHz. For the Y cells, the LTE may apply the maximum number of PDCCH candidates or CCEs calculated based on a time unit corresponding to four slots of the 480 kHz SCS and/or apply the maximum number of PDCCH candidates or CCEs calculated based on a time unit corresponding to 8 slots of the 480 kHz SCS (because one slot of the 120 kHz SCS corresponds to four slots of the 480 kHz SCS or 8 slots of the 960 kHz SCS).

Operations based on a time unit corresponding to the ref-SCS may be defined as follows. For convenience of explanation, the ratio between an actual configured SCS and the ref-SCS is assumed to be A. (For example, if the configured SCS is 960 kHz and the ref-SCS for the 960 kHz SCS is set to the 120 kHz SCS, A=8. If the configured SCS is 480 kHz and the ref-SCS for the 480 kHz SCS is set to the 120 kHz SCS, A=4). Additionally, it is assumed that the maximum number of times that PDCCH candidate monitoring (or blind detection) is performed on a slot basis for the configured SCS is B1 and the maximum number of CCEs is B2.

When A slots are set to a new time unit, the maximum number of PDCCH candidates monitored within the time unit and the maximum number of CCEs may be determined as A x B1 and A x B2, respectively. Specifically, for example, when the ref-SCS for 960 kHz is set to 120 kHz, A becomes 8. In this case, the maximum number of PDCCH candidates monitored in 8 slots of 960 kHz may be 8 x B1, and the maximum number of CCEs may be 8 x B2. When the ref-SCS for 480 kHz is set to 120 kHz, A becomes 4. In this case, the maximum number of PDCCH candidates monitored in four slots of 480 kHz may be 4 x B1, and the maximum number of CCEs may be 4 x B2.

Additionally, the above method is merely one example. That is, the method is not the only mode of operation. The number of monitored PDCCH candidates and/or the number of CCEs in A slots (corresponding to one slot of the ref-SCS) may be configured in various ways, including the method described above.

Additionally, the maximum number of monitored PDCCH candidates and the maximum number of CCEs, which are determined in units of A slots, may be evenly distributed over slot units, each of which consists of A slots. Alternatively, the maximum number of monitored PDCCH candidates and the maximum number of CCEs may be biased to a specific number of slots a (for example, the maximum number of monitored PDCCH candidates and the maximum number of CCEs may be biased to first "a" slots or last "a" slots).

1.2) For PDCCH monitoring in multiple DL cells with different numerologies, the ref-SCS may be used to determine the maximum number of monitored PDCCH candidates and/or the maximum number of CCEs for each numerology.

For PDCCH monitoring in multiple DL cells with different numerologies, the maximum number of monitored PDCCH candidates and/or CCEs within one slot for each numerology may be determined according to Equation 3 and/or Equation 4.

Equation 3 (maximum number of PDCCH candidates to monitor):

$$M_{\text{PDCCH}}^{\text{total,slot},\mu} = \left\lfloor N_{\text{cells}}^{\text{cap}} \cdot M_{\text{PDCCH}}^{\text{max,slot},\mu} \cdot N_{\text{cells}}^{\text{DL},\mu} \middle/ \sum_{j=0}^{3} N_{\text{cells}}^{\text{DL},j} \right\rfloor$$

Equation 4 (maximum number of non-overlapped CCEs):

$$C_{\mathrm{PDCCH}}^{\mathrm{total,slot},\mu} = \left\lfloor N_{\mathrm{cells}}^{\mathrm{cap}} \cdot C_{\mathrm{PDCCH}}^{\mathrm{max,slot},\mu} \cdot N_{\mathrm{cells}}^{\mathrm{DL},\mu} \Big/ \sum_{j=0}^{3} N_{\mathrm{cells}}^{\mathrm{DL},j} \right\rfloor$$

In Equation 3 and/or Equation 4, if the ref-SCS is configured, the values of $N_{\mathrm{cells}}^{\mathrm{DL},\mu}$ (referred to as N_cells^(DL,μ)), $M_{\mathrm{PDCCH}}^{\mathrm{max,slot},\mu}$ (referred to as M_PDCCH^(max,slot,μ)), and $C_{\mathrm{PDCCH}}^{\mathrm{max,slot},\mu}$ referred to as C_PDCCH^(max,slot,μ)), which are determined for each SCS (or numerology), may be replaced with those for to the ref-SCS. This means that if an actual configured SCS is different from the ref-SCS, the configured SCS may be replaced with the ref-SCS. Details will be described below.

1.2.1) When the value of N_cells^(DL,μ) is applied to Equation 3 and/or Equation 4, the actual configured SCS is replaced with the ref-SCS. For example, if the ref-SCS for μ=6 (i.e., 960 kHz SCS) is set to 120 kHz (i.e., μ=3), N_cells^(DL,μ=6) is replaced with N_cells^(DL,μ=3). If μ=3 and μ=6 are mixed and configured, and if the ref-SCS for μ=6 is set to μ=3, the value of N_cells^(DL,μ) for μ=3 (i.e., 120 kHz) may be calculated by adding N_cells^(DL,μ=6) to N_cells^(DL,μ=3) for μ=3.

1.2.2) When the values of M_PDCCH^(max,slot,μ) and/or C_PDCCH^(max,slot,μ) are applied to Equation 3 and/or Equation 4, different values may be obtained for each value of μ, depending on configurations.

- Alt1: Regardless of the ref-SCS, the maximum number of monitored PDCCH candidates and/or CCEs per slot, which is defined as the UE capability, may be directly used as M _PDCCH^(max,slot,μ) and/or C_PDCCH^(max,slot,μ).
- Alt2: Regardless of the ref-SCS, values derived from the maximum number of monitored PDCCH candidates and/or CCEs per slot, which is defined as the UE capability, may be directly used as M_PDCCH^(max,slot,μ) and/or C_PDCCH^(max,slot,μ). If the derived values are $M_{\mathrm{PDCCH}}^{\mathrm{max,slot}}$ (referred to as M_PDCCH^(max,slot)) and/or $C_{\mathrm{PDCCH}}^{\mathrm{max,slot}}$ (referred to as C_PDCCH^(max,slot)), the values of M_PDCCH^(max,slot) and/or C_PDCCH^(max,slot) for 120 kHz and 960 kHz may be replaced with the average value for the two SCS.
- Alt3: For an SCS (or μ) where the ref-SCS is configured, N_cells^(DL,μ), M_PDCCH^(max,slot,μ), and/or C_PDCCH^(max,slot,μ) are replaced with values based on the ref-SCS. For an SCS (or μ) where no ref-SCS is configured, values predefined for the actual configured SCS may be used as N_cells^(DL,μ), M_PDCCH^(max,slot,μ), and/or C_PDCCH^(max,slot,μ).

Additionally, after determination of the values of M_PDCCH^(max,slot,μ) and/or C_PDCCH^(max,slot,μ) according to the above-described alternatives (e.g., Alt1, Alt2, or Alt3), the values of M_PDCCH^(max,slot,μ) and/or C_PDCCH^(max,slot,μ) may be distributed over multiple slots of the actual SCS, which is one slot duration for the ref-SCS.

For example, when the 960 kHz SCS is configured and the reference SCS is set to 120 kHz, a method may be required to distribute the values of M_PDCCH^(max,slot,μ) and/or C_PDCCH^(max,slot,μ), which are obtained from Equation 3 and/or Equation 4, over 8 slots of the 960 kHz SCS (because one slot of the ref-SCS corresponds to 8 slots of the 960 kHz SCS). Specifically, M_PDCCH^(max,slot,μ) and/or C_PDCCH^(max,slot,μ) may be evenly distributed over multiple slots. Alternatively, M_PDCCH^(max,slot,μ) and/or C_PDCCH^(max,slot,μ) may be assigned to first or last "a" slots among the multiple slots. The value of "a" may be predefined or semi-statically configured by RRC.

Additionally, assuming that the value of M_PDCCH^(max,slot,μ) per slot related to the actual configured SCS is X1, and the value of M_PDCCH^(max,slot,μ) per slot related to the ref-SCS is X2, and assuming that the value of M_PDCCH^(max,slot,μ) calculated according to Method 1.2.2 is X3, X1, X2, and X3 may have different values. In this case, the aforementioned distribution method may be related to a method of appropriately distributing the value of X3 over multiple slots of the actual configured SCS (where multiple slots corresponds to the length of one slot of the ref-SCS).

The method described in Section 1.1 and/or Alt1, Alt2, and Alt3 described in Section 1.2 may be used independently to calculate M_PDCCH^(max,slot,μ) and/or C_PDCCH^(max,slot,μ), but they may also be used in combinations of two or more. For example, the LTE may calculate N_cells^(DL,μ) using the method described in Section 1.1 and then calculate M _PDCCH^(max,slot,μ) and C_PDCCH^(max,slot,μ) using one of the alternatives described in Section 2.2 (or using a combination of two or more alternatives). Thereafter, the LTE may calculate M_PDCCH^(max,slot,μ) and/or C_PDCCH^(max,slot,μ) based on the obtained results.

The aforementioned methods may be used independently or in combination with one or more methods/conditions. In addition, specific conditions may be required to configure and/or use the aforementioned methods. For example, the conditions required for the setup and usage may include: whether a frequency band being used (e.g., 60GHz) or a configured bandwidth (or the number of RBs) satisfies a specific value; and whether a configured SCS (or numerology) satisfies a specific value (e.g., 480 kHz or 960 kHz). The values used in these conditions may be predefined, semi-statically configured through higher layer signaling (e.g., RRC, MAC-CE), or dynamically configured by DCI.

The contents of the present disclosure are not limitedly applied only to LTL and/or DL signal transmission and reception. For example, the contents of the present disclosure may also be used for direct communication between LTEs. In this document, the term based station (BS) may be understood as a concept including a relay node as well as a BS. For example, the operations of a BS described in the present disclosure may be performed by a relay node as well as the BS.

It is obvious that each of the examples of the proposed methods may also be included as one implementation method of the present disclosure, and thus each example may be regarded as a kind of proposed method. Although the above-described proposed methods may be implemented independently, some of the proposed methods may be combined and implemented. In addition, it may be regulated that information on whether the proposed methods are applied (or information on rules related to the proposed methods) is transmitted from the BS to the UE in a predefined signal (e.g., physical layer signaling or higher layer signaling).

Implementation examples

FIG. 4 is a flowchart illustrating a signal transmission and reception method according to embodiments of the present disclosure.

Referring to FIG. 4, the embodiments of the present disclosure may be performed by the LTE and may include: configuring N1 and N2 (S401); determining M1 and M2 based on that the sum of N1 and N2 exceeds Nc (S403); and monitoring first PDCCH candidates and second PDCCH candidates based on M1 and M2 (S405).

N1 represents the number of first DL cells for monitoring the first PDCCH candidates based on a first SCS. N1 is equivalent to $N\_cells^{(DL,\mu)}$ in Equations 3 and 4, where $\mu$ corresponds to the first SCS. N2 represents the number of second DL cells for monitoring the second PDCCH candidates based on a second SCS. N2 is equivalent to $N\_cells^{(DL,\mu)}$ in Equations 3 and 4, where $\mu$ corresponds to the second SCS. Nc represents the maximum number of cells in which the UE is capable of monitoring a PDCCH. Nc is determined by the capability of the LTE and is equivalent to $N\_cells^{cap}$ in Equations 3 and 4.

M1 represents the maximum number of monitored first PDCCH candidates per time unit and per serving cell. M1 is equivalent to $M\_PDCCH^{(total,slot,\mu)}$ in Equation 3, where $\mu$ corresponds to the first SCS. M2 represents the maximum number of monitored second PDCCH candidates per time unit and per serving cell. M2 is equivalent to $M\_PDCCH^{(total,slot,\mu)}$ in Equation 3, where $\mu$ corresponds to the second SCS.

Mmax1 represents the maximum number of monitored PDCCH candidates per time unit and per serving cell for the first SCS. Mmax1 is equivalent to $M\_PDCCH^{(max,slot,\mu)}$ in Equation 3, where $\mu$ corresponds to the first SCS. Mmax2 represents the maximum number of monitored PDCCH candidates per time unit and per serving cell for the second SCS. Mmax2 is equivalent to $M\_PDCCH^{(max,slot,\mu)}$ in Equation 3, where $\mu$ corresponds to the second SCS.

C1 represents the maximum number of non-overlapped first CCEs per time unit and per serving cell. C1 is equivalent to $C\_PDCCH^{(total,slot,\mu)}$ in Equation 4, where $\mu$ corresponds to the first SCS. C2 represents the maximum number of non-overlapped second CCEs per time unit and per serving cell. C2 is equivalent to $C\_PDCCH^{(total,slot,\mu)}$ in Equation 4, where $\mu$ corresponds to the second SCS.

Cmax1 represents the maximum number of non-overlapped CCEs per time unit and per serving cell for the first SCS. Cmax1 is equivalent to $C\_PDCCH^{(max,slot,\mu)}$ in Equation 3, where $\mu$ corresponds to the first SCS. Cmax2 represents the maximum number of non-overlapped CCEs per time unit and per serving cell for the second SCS. Cmax2 is equivalent to $C\_PDCCH^{(max,slot,\mu)}$ in Equation 3, where $\mu$ corresponds to the second SCS.

In Equations 3 and 4, $M\_PDCCH^{(total,slot,\mu)}$, $C\_PDCCH^{(total,slot,\mu)}$, $M\_PDCCH^{(max,slot,\mu)}$, and $C\_PDCCH^{(max,slot,\mu)}$ are specified in units of slots. However, considering that Section 1.1 proposes an extension of the unit for monitoring PDCCH candidates to multiple slots, it is possible to interpret the slot in Equations 3 and 4 as representing not only a single slot but also multiple slots. In other words, $M\_PDCCH^{(total,slot,\mu)}$, $C\_PDCCH^{(total,slot,\mu)}$, $M\_PDCCH^{(max,slot,\mu)}$, and $C\_PDCCH^{(max,slot,\mu)}$ in Equations 3 and 4 may be determined based on a time unit consisting of one or more slots.

Referring to Equation 3, M1 is determined based on Nc, N1, N2, and Mmax1. In this case, when M1 is determined, if a reference SCS is configured for the first SCS, values associated with the first SCS may be replaced with values related to the reference SCS rather than the first SCS. Since Nc is the value for the entirety of the UE rather than a specific SCS, Nc remains unchanged. Since N1 and Mmax1 are based on the first SCS, N1 and Mmax1 may be replaced with values related to the reference SCS. Since N2 is based on the second SCS, N2 may remain unchanged if no reference SCS is configured for the second SCS. However, if a reference SCS is also configured for the second SCS, N2 may be replaced with a value related to the reference SCS.

Referring to Equation 4, C1 is determined based on Nc, N1, N2, and Cmax1. In this case, when C1 is determined, if the reference SCS is configured for the first SCS, values associated with the first SCS may be replaced with values related to the reference SCS rather than the first SCS. Since Nc is the value for the entirety of the UE rather than a specific SCS, Nc remains unchanged. Since N1 and Cmax1 are based on the first SCS, N1 and Cmax1 may be replaced with values related to the reference SCS. Since N2 is based on the second SCS, N2 may remain unchanged if no reference SCS is configured for the second SCS. However, if the reference SCS is also configured for the second SCS, N2 may be replaced with a value related to the reference SCS.

Whether the reference SCS is configured may be determined based on the first SCS. Referring to Section 1, the reference SCS may be configured when the first SCS is 480 kHz and/or 960 kHz. The reference SCS may be 120 kHz ($\mu$=3). Generally, the reference SCS is set to a value smaller than the first SCS.

According to Alt3 in Section 1.2, when M2 is determined, if no reference SCS is configured for the second SCS, N2 and Mmax2 may be determined to be values associated with the second SCS without any changes. Similarly, when C2 is determined, if no reference SCS is configured N2 and Cmax2 may be determined to be values associated with the second SCS without any changes.

If the reference SCS is configured for the first SCS, M1 may be evenly distributed over slots of the first SCS, which correspond to one slot of the reference SCS. Alternatively, M1 may be distributed only over first "a" slots or last "a" slots of the first SCS, which correspond to one slot of the reference SCS.

If the reference SCS is configured for the first SCS, C1 may be evenly distributed over slots of the first SCS, which correspond to one slot of the reference SCS. Alternatively, C1 may be distributed only over first "a" slots or last "a" slots of the first SCS, which correspond to one slot of the reference SCS.

In addition to the operations described with reference to FIG. 4, the operations described with reference to FIGS. 1 to 3 and/or one or more of the operations described in Section 1 may be combined and further performed.

Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

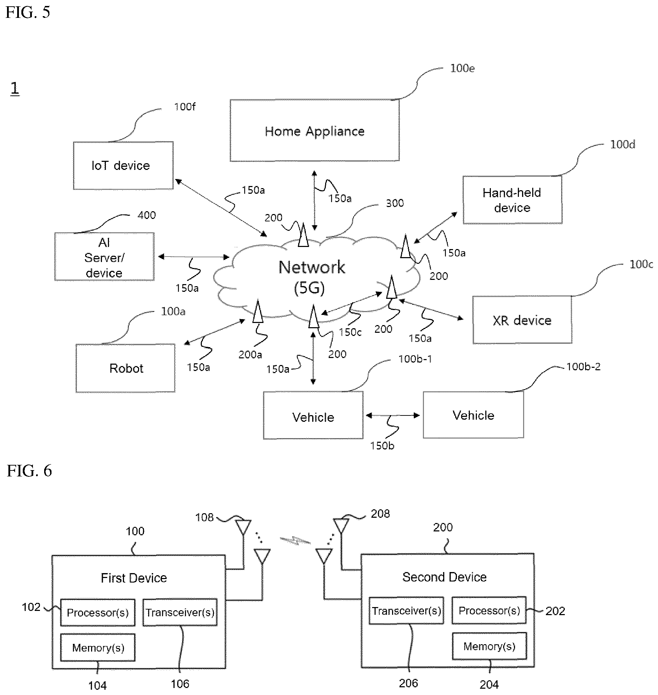

FIG. 5 illustrates a communication system 1 applied to the present disclosure.

Referring to FIG. 5, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100fBS 200 and between the BSs 200. Herein, the wireless communication/connections may be established through various RATs (e.g., 5G NR) such as LTL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

Example of wireless device to which the present disclosure is applied

FIG. 6 illustrates wireless devices applicable to the present disclosure.

Referring to FIG. 6, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 5.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

Example of use of wireless device to which the present disclosure is applied

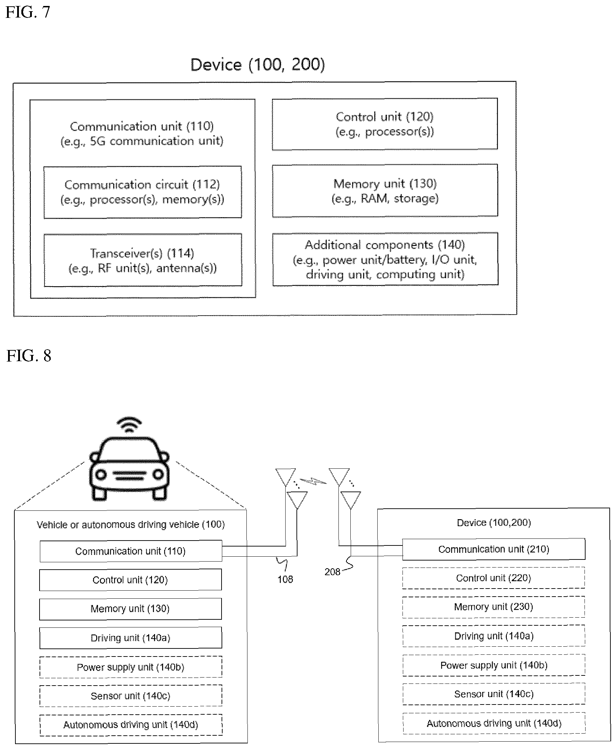

FIG. 7 illustrates another example of a wireless device applied to the present disclosure. The wireless device may be implemented in various forms according to a use case/service (refer to FIG. 5).

Referring to FIG. 7, wireless devices 100 and 200 may correspond to the wireless devices 100 and 200 of FIG. 6 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 6. For example, the transceiver(s) 114 may include the one or more transceivers 106 and 206 and/or the one or more antennas 108 and 208 of FIG. 6. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 5), the vehicles (100b-1 and 100b-2 of FIG. 5), the XR device (100c of FIG. 5), the hand-held device (100d of FIG. 5), the home appliance (100e of FIG. 5), the IoT device (100f of FIG. 5), a digital broadcasting terminal, a hologram device, a public safety device, an MTC device, a medical device, a FinTech device (or a finance device), a security device, a climate/environment device, the AI server/device (400 of FIG. 5), the BSs (200 of FIG. 5), a network node, or the like. The wireless device may be mobile or fixed according to a use case/service.

In FIG. 7, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

Example of vehicle or autonomous driving vehicle to which the present disclosure is applied

FIG. 8 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 8, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 7, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

As described above, the present disclosure is applicable to various wireless communication systems.

**Claims**

1. A method of transmitting and receiving a signal by a user equipment (UE) in a wireless communication system, the method comprising:

    configuring N1 first downlink cells for monitoring first physical downlink control channel (PDCCH) candidates based on a first subcarrier spacing (SCS) and configuring N2 second downlink cells for monitoring second PDCCH candidates based on a second SCS;
    based on that a sum of N1 and N2 exceeds a maximum number of cells in which the LTE is capable of monitoring a PDCCH, Nc, determining a maximum number of first PDCCH candidates to be monitored per time unit and per cell, M1 and a maximum number of second PDCCH candidates to be monitored per time unit and per cell, M2; and
    monitoring the first PDCCH candidates and the second PDCCH candidates based on M1 and M2,
    wherein M1 is determined based on (i) Nc, (ii) N1, (iii) N2, and (iv) Mmax1, where Mmax1 is a maximum number of PDCCH candidates to be monitored per time unit and per cell for the first SCS, and
    wherein based on that a reference SCS for the first SCS is configured, N1 and Mmax1 are determined as values related to the reference SCS rather than the first SCS.

2. The method of claim 1, further comprising:

    based on that the sum of N1 and N1 exceeds Nc, determining a maximum number of non-overlapped first control channel elements (CCEs) per time unit and per cell within the first downlink cells, C1 and determining a maximum number of non-overlapped second CCEs per time unit and per serving cell within the second downlink cells, C2; and
    monitoring the first CCEs and the second CCEs based on C1 and C2,
    wherein C1 is determined based on (i) Nc, (ii) N1, (iii) N2, and (iv) Cmax1, where Cmax1 is a maximum number of non-overlapped CCEs per time unit and per cell for the first SCS, and
    wherein based on that the reference SCS for the first SCS is configured, N1 and Cmax1 are determined as values related to the reference SCS rather than the first SCS.

3. The method of claim 1, wherein the reference SCS is 120 kHz.

4. The method of claim 1, wherein whether the reference SCS is configured is determined based on the value of the first SCS.

5. The method of claim 1, wherein the reference SCS is smaller than the first SCS.

6. The method of claim 1, wherein M1 is evenly distributed over all slots of the first SCS corresponding to one slot of the reference SCS.

7. The method of claim 1, wherein M1 is distributed only over first "a" slots among slots of the first SCS corresponding to one slot of the reference SCS, or
   wherein M1 is distributed only over last "a" slots among the slots of the first SCS corresponding to the one slot of the reference SCS.

8. The method of claim 2, wherein C1 is evenly distributed over all slots of the first SCS corresponding to one slot of the reference SCS.

9. The method of claim 2, wherein C1 is distributed only over first "a" slots among slots of the first SCS corresponding to one slot of the reference SCS, or
wherein M1 is distributed only over last "a" slots among the slots of the first SCS corresponding to the one slot of the reference SCS.

10. The method of claim 1, wherein M2 is determined based on (i) Nc, (ii) N1, (iii) N2, and (iv) Mmax2, where Mmax2 is a maximum number of PDCCH candidates to be monitored per slot and per cell, and
wherein based on that no reference SCS is configured for the second SCS, N2 and Mmax2 are determined as values related to the second SCS.

11. The method of claim 2, wherein C2 is determined based on (i) Nc, (ii) N1, (iii) N2, and (iv) Cmax2, where Cmax2 is a maximum number of non-overlapped CCEs per slot and per cell, and
wherein based on that no reference SCS is configured for the second SCS, N2 and Cmax2 are determined as values related to the second SCS.

12. A user equipment (UE) configured to transmit and receive a signal in a wireless communication system, the LTE comprising:

at least one transceiver;
at least one processor; and
at least one memory operably connected to the at least one processor and configured to store instructions that, when executed, cause the at least one processor to perform specific operations comprising:

configuring N1 first downlink cells for monitoring first physical downlink control channel (PDCCH) candidates based on a first subcarrier spacing (SCS) and configuring N2 second downlink cells for monitoring second PDCCH candidates based on a second SCS;
based on that a sum of N1 and N2 exceeds a maximum number of cells in which the LTE is capable of monitoring a PDCCH, Nc, determining a maximum number of first PDCCH candidates to be monitored per time unit and per cell, M1 and a maximum number of second PDCCH candidates to be monitored per time unit and per cell, M2; and
monitoring the first PDCCH candidates and the second PDCCH candidates based on M1 and M2,
wherein M1 is determined based on (i) Nc, (ii) N1, (iii) N2, and (iv) Mmax1, where Mmax1 is a maximum number of PDCCH candidates to be monitored per time unit and per cell for the first SCS, and
wherein based on that a reference SCS for the first SCS is configured, N1 and Mmax1 are determined as values related to the reference SCS rather than the first SCS.

13. An apparatus configured for a user equipment (UE), the apparatus comprising:

at least one processor; and
at least one computer memory operably connected to the at least one processor and configured to, when executed, cause the at least one processor to perform operations comprising:

configuring N1 first downlink cells for monitoring first physical downlink control channel (PDCCH) candidates based on a first subcarrier spacing (SCS) and configuring N2 second downlink cells for monitoring second PDCCH candidates based on a second SCS;
based on that a sum of N1 and N2 exceeds a maximum number of cells in which the LTE is capable of monitoring a PDCCH, Nc, determining a maximum number of first PDCCH candidates to be monitored per time unit and per cell, M1 and a maximum number of second PDCCH candidates to be monitored per time unit and per cell, M2; and
monitoring the first PDCCH candidates and the second PDCCH candidates based on M1 and M2,
wherein M1 is determined based on (i) Nc, (ii) N1, (iii) N2, and (iv) Mmax1, where Mmax1 is a maximum number of PDCCH candidates to be monitored per time unit and per cell for the first SCS, and
wherein based on that a reference SCS for the first SCS is configured, N1 and Mmax1 are determined as values related to the reference SCS rather than the first SCS.

**14.** A computer-readable non-volatile storage medium comprising at least one computer program configured to cause at least one processor to perform operations comprising:

configuring N1 first downlink cells for monitoring first physical downlink control channel (PDCCH) candidates based on a first subcarrier spacing (SCS) and configuring N2 second downlink cells for monitoring second PDCCH candidates based on a second SCS;

based on that a sum of N1 and N2 exceeds a maximum number of cells in which the LTE is capable of monitoring a PDCCH, Nc, determining a maximum number of first PDCCH candidates to be monitored per time unit and per cell, M1 and a maximum number of second PDCCH candidates to be monitored per time unit and per cell, M2; and

monitoring the first PDCCH candidates and the second PDCCH candidates based on M1 and M2,

wherein M1 is determined based on (i) Nc, (ii) N1, (iii) N2, and (iv) Mmax1, where Mmax1 is a maximum number of PDCCH candidates to be monitored per time unit and per cell for the first SCS, and

wherein based on that a reference SCS for the first SCS is configured, N1 and Mmax1 are determined as values related to the reference SCS rather than the first SCS.

FIG. 1

EP 4 280 492 A1

FIG. 2

Resource grid

22

FIG. 3

One slot

f

t

FIG. 4

| Configuring N1 and N2 | S401 |

| based on N1+N2 > Nc, determining M1 and M2 | S403 |

| based on M1 and M2, monitoring first PDCCH candidates and second PDCCH candidates | S405 |

FIG. 5

1

FIG. 6

FIG. 7

Device (100, 200)

Communication unit (110)
(e.g., 5G communication unit)

Communication circuit (112)
(e.g., processor(s), memory(s))

Transceiver(s) (114)
(e.g., RF unit(s), antenna(s))

Control unit (120)
(e.g., processor(s))

Memory unit (130)
(e.g., RAM, storage)

Additional components (140)
(e.g., power unit/battery, I/O unit,
driving unit, computing unit)

FIG. 8

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108

208

Device (100,200)

Communication unit (210)

Control unit (220)

Memory unit (230)

Driving unit (140a)

Power supply unit (140b)

Sensor unit (140c)

Autonomous driving unit (140d)

## INTERNATIONAL SEARCH REPORT

| International application No. |
|---|
| **PCT/KR2022/000720** |

**A. CLASSIFICATION OF SUBJECT MATTER**

**H04L 1/00**(2006.01)i; **H04L 5/00**(2006.01)i; **H04W 72/04**(2009.01)i; **H04W 72/12**(2009.01)i

According to International Patent Classification (IPC) or to both national classification and IPC

**B. FIELDS SEARCHED**

Minimum documentation searched (classification system followed by classification symbols)

H04L 1/00(2006.01); H04W 28/18(2009.01); H04W 72/02(2009.01); H04W 72/04(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SCS, PDCCH 후보(PDCCH candidate), 하향링크 셀(downlink cell), 최대 개수 (maximum number), 모니터링(monitoring), 기준(reference)

**C. DOCUMENTS CONSIDERED TO BE RELEVANT**

| Category* | Citation of document, with indication, where appropriate, of the relevant passages | Relevant to claim No. |
|---|---|---|
| A | WO 2020-144831 A1 (NTT DOCOMO, INC.) 16 July 2020 (2020-07-16)<br>See paragraphs [0013]-[0045]; claim 1; and figures 1A-2B. | 1-14 |
| A | WO 2020-015643 A1 (VIVO MOBILE COMMUNICATIONS CO., LTD.) 23 January 2020 (2020-01-23)<br>See pages 5-18; and figures 2-7. | 1-14 |
| A | KR 10-2020-0018397 A (LG ELECTRONICS INC.) 19 February 2020 (2020-02-19)<br>See paragraphs [0383]-[0433]; and figures 10-11. | 1-14 |
| A | MODERATOR (HUAWEI). Feature lead summary#1 on PDCCH enhancements. R1-2002742, 3GPP TSG RAN WG1 Meeting #100bis-e, E-meeting. 21 April 2020.<br>See pages 1-13. | 1-14 |
| A | INTEL CORPORATION. On reduced PDCCH monitoring for redcap UEs. R1-2005881, 3GPP TSG RAN WG1 Meeting #102-E, e-Meeting. 08 August 2020.<br>See pages 2-8. | 1-14 |

☐ Further documents are listed in the continuation of Box C.　　☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 April 2022** | **26 April 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/000720**

| Patent document cited in search report | | | Publication date (day/month/year) | Patent family member(s) | | | Publication date (day/month/year) |
|---|---|---|---|---|---|---|---|
| WO | 2020-144831 | A1 | 16 July 2020 | CN | 113557774 | A | 26 October 2021 |
| | | | | EP | 3911055 | A1 | 17 November 2021 |
| | | | | WO | 2020-144831 | A1 | 25 November 2021 |
| WO | 2020-015643 | A1 | 23 January 2020 | AU | 2019-307437 | A1 | 04 February 2021 |
| | | | | CA | 3106480 | A1 | 23 January 2020 |
| | | | | CN | 110740479 | A | 31 January 2020 |
| | | | | CN | 110740479 | B | 08 June 2021 |
| | | | | CN | 113316258 | A | 27 August 2021 |
| | | | | EP | 3813420 | A1 | 28 April 2021 |
| | | | | JP | 2021-531695 | A | 18 November 2021 |
| | | | | KR | 10-2021-0028721 | A | 12 March 2021 |
| | | | | RU | 2754486 | C1 | 02 September 2021 |
| | | | | SG | 11202100414 | A | 25 February 2021 |
| | | | | US | 2021-0144746 | A1 | 13 May 2021 |
| KR | 10-2020-0018397 | A | 19 February 2020 | CN | 111758286 | A | 09 October 2020 |
| | | | | EP | 3726904 | A1 | 21 October 2020 |
| | | | | JP | 2021-511716 | A | 06 May 2021 |
| | | | | KR | 10-2021-0031422 | A | 19 March 2021 |
| | | | | US | 11051200 | B2 | 29 June 2021 |
| | | | | US | 2020-0314678 | A1 | 01 October 2020 |
| | | | | US | 2021-0028961 | A1 | 28 January 2021 |
| | | | | WO | 2020-032774 | A1 | 13 February 2020 |

Form PCT/ISA/210 (patent family annex) (July 2019)